# EUROPEAN PATENT APPLICATION

(11) **EP 4 394 317 A1**
(43) Date of publication of application: **03.07.2024**
(21) Application number: 22217449.2
(22) Date of filing: 31.12.2022
(51) Int. Cl.: G01C 15/00, G01S 7/00

(54) **REFLECTIVE TARGET**

(71) Applicant: Hilti Aktiengesellschaft, 9494 Schaan (LI)
(72) Inventor: Winter, Andreas, 6800 Feldkirch (AT)
(74) Representative: Hilti Aktiengesellschaft Corporate Intellectual Property

(57) **Abstract**

Reflective target (110) configured to be used in measuring and surveying applications, comprising a base element (111), a light reflecting area (112) configured to reflect light beams of a first range of wavelengths at least partially, a communications circuit (113) configured to be connected to a laser instrument (12) and/or a supervisory device (96) via a communication link, and a power source (114) configured to provide power. The target (110) further comprises a light receiving device (115) including an array of light receiving elements (116) and a signal processing unit (117), the light receiving elements (116) being configured to receive light beams of a second range of wavelengths and the signal processing unit (117) being configured to process the received light beams.

## Description

The present invention relates to a reflective target according to the definition of claim 1 and to a method for determining a rotational position of a reflective target according to the definition of claim 7.

### Background of the invention

Reflective targets are widely used in measuring and surveying applications, such as in the construction sector. A reflective target may be applied to a landmark or a position of interest and aimed at using a laser instrument, such as a theodolite or total station, having a light emitting element for emitting light such as laser light along an optical axis towards the reflective target. The laser instrument includes an optical arrangement for receiving the reflected light from the reflective target. Based on the reflected light the laser instrument may be accurately oriented towards the target.

US 7,913,405 B2 discloses a known reflective target configured to be used in measuring and surveying applications. The target comprises a base element, a light reflecting area configured to reflect light beams at least partially, a communications circuit configured to be connected to a laser instrument and a power source configured to provide power. Furthermore, the reflective target comprises an identification unit that is arranged at the base element, the identification unit comprising at least one array of light emitting elements configured to emit signals having predetermined characteristics indicating an identity of the reflective target and to emit a sequence of signals propagating in different directions.

The identity of the target and the rotational position of the target are determined by a method comprising the steps: Signals having predetermined characteristics indicating the identity of the reflective target are emitted by the light emitting elements of the identification unit in different directions, the sequence of signals, that are emitted by the light emitting elements, are received by the laser instrument, the identity of the target is determined by the laser instrument using the characteristics of the signals, and the rotational position of the target is determined by the laser instrument analyzing the amplitudes of the sequence of signals.

The disadvantage of the reflective target known from US 7,913,405 B2 and the method to determine the identity and the rotational position of that target is a low efficiency. To be able to identify and determine the rotational position of the reflective target, the light emitting elements of the identification unit must illuminate in vertical direction a huge angular space. Particularly for distances of more than hundred meters, only a very small fraction of the light emitted by the light emitting elements is received by a receiving device of the laser instrument.

### Summary of the invention

Thus, an object of the present invention is to obtain a reflective target that is capable of reflecting a light beam emitted from a laser instrument to measure a distance and capable of determining its rotational position with respect to the laser instrument.

These objects are achieved by realizing the features of the independent claims. Features which further develop the invention in an advantageous manner are described in the dependent claims.

According to an aspect of the present invention, there is provided a reflective target configured to be used in measuring and surveying applications. The target further comprises a light receiving device including an array of light receiving elements and a signal processing unit, the light receiving elements being configured to receive light beams of a second range of wavelengths and the signal processing unit being configured to process the received light beams.

The present invention is based on the idea of combining a passive target for distance measuring and a receiving device for determining the rotational position into a single reflective target.

Preferably, the light reflecting area includes at least one of a reflective foil, an array of cat-eyes, and an array of reflective prisms.

Preferably, the light receiving elements are arranged circumferentially about a central axis of the base element.

According to a further aspect of the present invention, there is provided a system for measuring and surveying applications, the system comprising at least one reflective target according to the present invention, a laser instrument including a distance measuring device configured to measure via a first light beam a distance to the target, an angle measuring device configured to measure an orientation of the first light beam relative to a reference orientation, an optical radiation source configured to emit a second light beam, and a device control unit configured to control the distance measuring device, angle measuring device and optical radiation source, and comprising a supervisory device, which has evaluation, data processing and control functionality.

Preferably, the laser instrument and the supervisory device are connected via a first communication link, and the target and the supervisory device are connected via a second communication link.

Preferably, the first light beam has a first angle of aperture in the range up to 2 degrees, and the second light beam has a second angle of aperture in the range above 5 degrees. The first light beam has a small first angle of aperture and is adapted for distance measuring, and the second light beam has a larger second angle of aperture and is adapted for determining the rotational position of the target.

According to a further aspect of the present invention, there is provided a method for determining a rotational position of a reflective target according to the present invention via a laser instrument including a distance measuring device configured to measure via a first light beam a distance to the target, an angle measuring device configured to measure an orientation of the first light beam relative to a reference orientation, an optical radiation source configured to emit a second light beam, and a device control unit configured to control the distance measuring device, angle measuring device and optical radiation source, and via a supervisory device, which has evaluation, data processing and control functionality, the method comprising:
▪ the laser instrument is rotated about an axis of rotation and the light receiving device is arranged in a receive mode to receive signals emitted by the optical radiation source,
▪ while rotating the laser instrument about the axis of rotation, a sequence of signals having predetermined characteristics is emitted by the optical radiation source and propagating in different directions,
▪ signals received by the light receiving elements are processed via a signal processing unit of the target, and
▪ the rotational position of the target in a plane perpendicular to the axis of rotation is determined by analyzing the amplitudes of the processed signals.

Preferably, the processed signals are transferred from the target to the laser instrument and the rotational position of the target is determined via the device control unit of the laser instrument. By transferring the processed signals to the laser instrument and determining the rotational position of the target via the device control unit of the laser instrument...

Preferably, the processed signals are transferred from the target via the supervisory device to the laser instrument. By transferring the processed signals via the supervisory device to the laser instrument only one long-range communication link is necessary. The laser instrument and the supervisory device may be connected via a long-range first communication link, and the target and the supervisory device may be connected via a short-range second communication link.

Preferably, the rotational position of the target is determined by analyzing the processed signals and using the predetermined characteristics of the signals emitted by the optical radiation source. By using the predetermined characteristics of the signals emitted by the optical radiation source, the reflective target can be identified and the risk to use a wrong reflective target is reduced drastically.

Preferably, the signals emitted by the optical radiation source are modulated with a modulation parameter to generate the predetermined characteristics. By modulating the optical radiation source with a modulation parameter, the reflective target can be identified and the risk to use a wrong reflective target is reduced drastically.

Preferably, the modulation parameter is varied over an angle with respect to a reference angle in the plane perpendicular to the axis of rotation, wherein the modulation parameter is preferably a frequency. By using a modulation parameter that is varied over the angle in the plane perpendicular to the axis of rotation, it is possible to determine the rotational position of the target without any time measurement, the information about the angle at which the target is positioned is included in the sequence of signals emitted by the optical radiation source.

Preferably, the axis of rotation is a vertical axis that is parallel to a local direction of gravitation and the laser instrument is rotated about said vertical axis to find the rotational position of the target that is a first rotational position in a horizontal plane perpendicular to the vertical axis. By rotating the laser instrument about the vertical axis, the rotational position of the target in the horizontal plane perpendicular to the vertical axis can be determined.

Preferably, in case that the first rotational position of the target has been found, the laser instrument is oriented in said first rotational position and a sequence of steps is performed to find a second rotational position of the target in a vertical plane, the sequence of steps comprising:
▪ the laser instrument is rotated about a horizontal axis that is perpendicular to the local direction of gravitation and the light receiving device is arranged in a receive mode to receive signals emitted by the optical radiation source,
▪ while rotating the laser instrument about the horizontal axis, a sequence of signals having predetermined characteristics is emitted by the optical radiation source and propagating in different directions,
▪ the signals received by the light receiving elements are processed via the signal processing unit, and
▪ the second rotational position of the target in the vertical plane that is perpendicular to the horizontal axis and oriented along the first rotational position is determined by analyzing the amplitudes of the processed signals.

According to a further aspect of the present invention, there is provided a computer program product comprising a program code, which is stored on a computer-readable medium and which has computer-executable instructions for performing a method according to the present invention.

### Brief Description of the drawings

The aspects of the invention are described or explained in more detail below, purely by way of example, with reference to working examples shown schematically in the drawing. Identical elements are labelled with the same reference numerals in the figures. The described embodiments are generally not shown true in scale, and they are also not to be interpreted as limiting the invention. Specifically,
- FIG. 1: shows a system for measuring and surveying comprising a reflective target according to the present invention, a laser instrument, and a supervisory device, which is integrated in a remote controller,
- FIGS. 2A, B: show an exemplary version of the laser instrument used in the system of FIG. 1 (FIG. 2A) and a block diagram of the main components of the laser instrument as illustrated in FIG. 2A (FIG. 2B),
- FIGS. 3A, B: show an exemplary version of the remote controller used in the system of FIG. 1 (FIG. 3A) and a block diagram of the main components of the remote controller as illustrated in FIG. 3A (FIG. 3B),
- FIG. 4: shows an exemplary version of a reflective target according to the present invention including a reflective foil, an array of cat-eyes, and an array of prisms as light reflecting area,
- FIG. 5: shows a method for determining a rotational position of a reflective target in a flow chart,
- FIGS. 6A-H: show how a first rotational position is determined by using the method of FIG. 5, and
- FIGS. 7A-E: show how a second rotational position is determined by using the method of FIG. 5.

Reference will now be made in detail to the present preferred embodiment, an example of which is illustrated in the accompanying drawings. It is to be understood that the technology disclosed herein is not limited in its application to the details of construction and the arrangement of components set forth in the following description or illustrated in the drawings. The technology disclosed herein is capable of other embodiments and of being practiced or of being carried out in various ways.

Also, it is to be understood that the phraseology and terminology used herein is for the purpose of description and should not be regarded as limiting. All definitions, as defined and used herein, should be understood to control over dictionary definitions, definitions in documents incorporated by reference, and/or ordinary meanings of the defined terms. The indefinite articles "a" and "an", as used herein in the specification and in the claims, unless clearly indicated to the contrary, should be understood to mean "at least one". The phrase "and/or", as used herein in the specification and in the claims, should be understood to mean "either or both" of the elements so conjoined, i.e., elements that are conjunctively present in some cases and disjunctively present in other cases. Multiple elements listed with "and/or" should be construed in the same fashion, i.e., "one or more" of the elements so conjoined. Other elements may optionally be present other than the elements specifically identified by the "and/or" clause, whether related or unrelated to those elements specifically identified.

The use of "including, or "comprising, or "having" and variations thereof herein is meant to encompass the items listed thereafter and equivalents thereof as well as additional items. Unless limited otherwise, the terms "connected", "coupled", and "mounted", and variations thereof herein are used broadly and encompass direct and indirect connections, couplings, and mountings. In addition, the terms "connected" and "coupled", and variations thereof are not restricted to physical or mechanical connections or couplings.

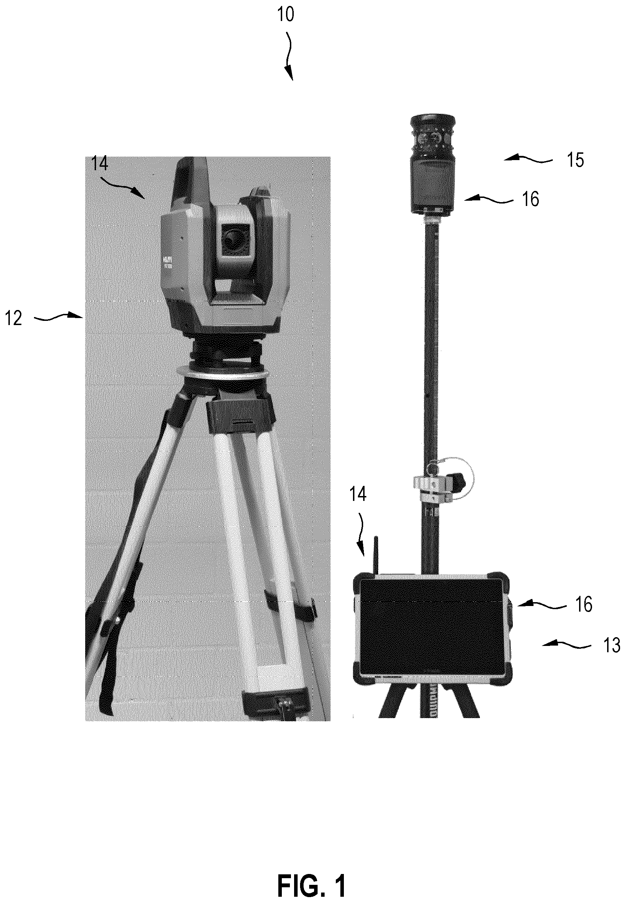

**FIG. 1** schematically illustrates a typical measuring and surveying application in the construction sector as an example of a system **10** for measuring and surveying applications in a worksite environment **11,** in which the laser instrument is positioned. The system 10 comprises a laser instrument **12** having distance and angle measuring functionality, a remote controller **13** that is connected via a first communication link **14** to the laser instrument 12, and a reflective target **15** that is connected via a second communication link **16** to the remote controller 13.

Typically, the communications via the first communication link 14 between the laser instrument 12 and remote controller 13 and via the second communication link 16 between the target 15 and remote controller 13 are wireless, such as using WiFi format or Bluetooth format. In FIG. 1, the first communication link 14 and second communication link 16 are depicted as wireless link, although it certainly could be constructed by use of an electrical cable, an optical cable, or any other type of suitable cable.

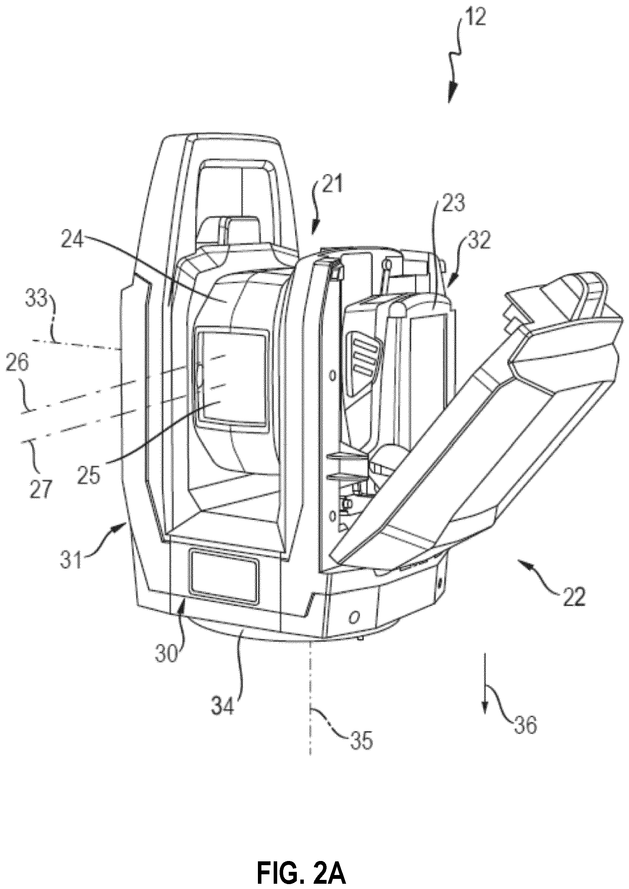

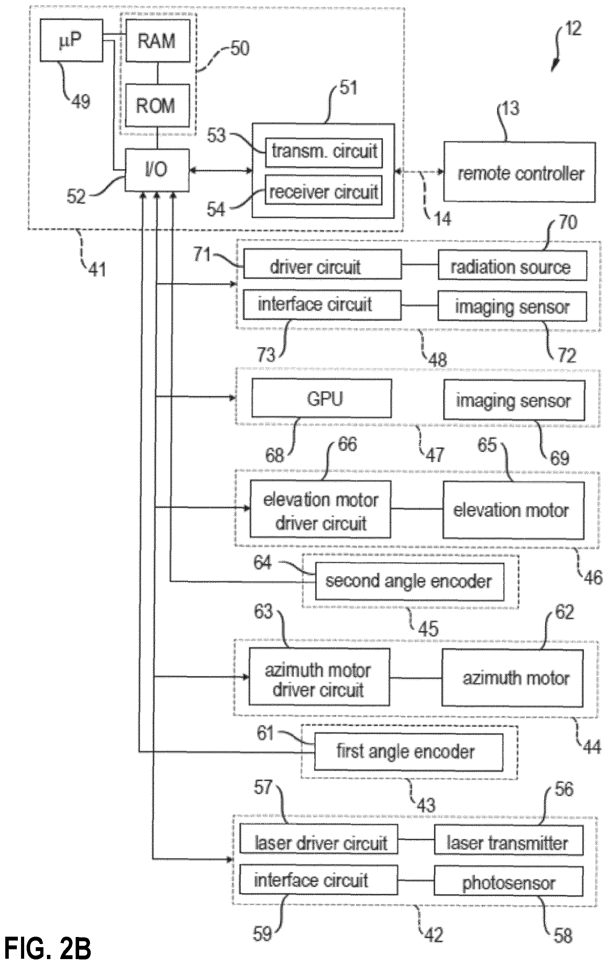

**FIGS. 2A****, B** show an exemplary version of the laser instrument 12 used in the system 10 of FIG. 1 in a perspective view (FIG. 2A) and a block diagram of the main components of the laser instrument 12 as illustrated in FIG. 2A (FIG. 2B).

The laser instrument 12 is designed as robotic total station and comprises a measuring head **21,** a main housing **22,** and a battery pack **23** configured to power the laser instrument 12. The measuring head 21 is enclosed by a housing **24,** which includes an exit window **25.** In the housing 24, a distance measuring device that emits a laser beam **26** and a tracking device that emits optical radiation **27** are arranged. The laser beam 26 and the optical radiation 27 are emitted through the exit window 25 to leave the housing 24.

The laser beam 26 is also called first light beam, and the optical radiation 27 is also called second light beam. The first light beam 26 is within a first range of wavelengths and has a first angle of aperture, and the second light beam 27 is within a second range of wavelengths and has a second angle of aperture.

The main housing 22 is U-formed and includes a bottom portion **30,** a first side portion **31,** and a second side portion **32.** The measuring head 21 is pivotably mounted to the main housing 22 about a pivoting axis **33** and is arranged between the first side portion 31 and the second side portion 32. The main housing 22 can rotate completely around its circumference at a full 360° angle with respect to a disc **34** about a rotating axis **35.**

An azimuth motor device and a first angle measuring device are located in the bottom portion 30 of the main housing 22 and allow to rotate the laser instrument 12 about the rotating axis 35 and to determine the direction of the laser beam 26 in a horizontal plane perpendicular to a local direction of gravitation **36.** An elevation motor device and a second angle measuring device are located in the first side portion 31 of the main housing 22 and allow the measuring head 21 to pivot about the pivoting axis 33 and to determine the direction of the laser beam 26 in a vertical plane parallel to the local direction of gravitation 36. To make the laser instrument 12 fully automatic, it is preferred to include a self-leveling device, which may be arranged in the bottom portion 30 of the main housing 22.

FIG. 2B shows a block diagram of the main components of the laser instrument 12. The laser instrument 12 may include a first electronic device **41,** a distance measuring device **42,** a first angle measuring device **43** configured to measure the orientation of the laser beam in the horizontal plane (horizontal angle), an azimuth motor device **44,** a second angle measuring device **45** configured to measure the orientation of the laser beam in the vertical plane (vertical angle), an elevation motor device **46,** an overview camera device **47,** and a tracking device **48** configured to track a target via the laser instrument 12.

The laser instrument 12 shown in FIG. 2A is a robotic total station. A total station is called robotic if it is able automatically to follow a target through the worksite environment. To allow following of a target, a robotic total station comes equipped with the azimuth and elevation motor devices 44, 46 for automatically rotating the laser instrument horizontally and vertically, and the tracking device 48 for tracking the target.

The first electronic device 41 comprises a first processing circuit (µP) **49,** a first memory circuit **50** that may include associated random-access memory (RAM) and read only memory (ROM), a first communications circuit **51,** and a first input/output (I/O) interface circuit **52.** The first processing circuit 49, also called device control unit, may communicate with the first memory circuit 50 and first communications circuit 51 and is configured to control the laser instrument 12. The first communications circuit 51 includes a first transmitter circuit **53** and a first receiver circuit **54** and is configured to be connected to a communications circuit of the remote controller via the communication link. The first input/output interface circuit 52 is an interface between the first processing circuit 49 and the various types of motor driver circuits and sensor circuits of the laser instrument 12.

The distance measuring device 42 includes a laser transmitter **56,** a laser driver circuit **57,** a photosensor **58,** and a laser receiver interface circuit **59.** The laser driver circuit 57 provides current for the laser transmitter 56 which emits the laser beam 26. The photosensor 58 receives at least a part of the laser beam 26 reflected at a target or a surface of the worksite environment, and the current signal that is outputted by the photosensor 58 is directed to the laser receiver interface circuit 59. After appropriate amplification and demodulation, the signal is sent via the first input/output interface circuit 52 to the first processing circuit 49.

The first angle measuring device 43 includes a first angle encoder **61,** which will provide input signals to the first processing circuit 49, so that it knows exactly in which horizontal angle the laser transmitter 56 is arranged in the horizontal plane; the output signal of the first angle encoder 61 is directed to the first input/output interface circuit 52. The azimuth motor device 44 includes an azimuth motor **62,** which is the motive force to rotate the main housing 22 of the laser instrument 12 about the first rotating axis 32, and an azimuth motor driver circuit **63,** which will provide the proper current and voltage to drive the azimuth motor 62.

The second angle measuring device 45 includes a second angle encoder **64,** which will provide input signals to the first processing circuit 49, so that it knows exactly in which vertical angle the laser transmitter 56 is arranged in the vertical plane; the output signal of the second angle encoder 64 is directed to the first input/output interface circuit 52. The elevation motor device 46 includes an elevation motor **65,** which is the motive force to pivot the measuring head 21 about the first pivoting axis 30, and an elevation motor driver circuit **66,** which will provide the proper current and voltage to drive the elevation motor 65.

The overview camera device 47 may be arranged in the measuring head 21 of the laser instrument 12 for capturing an image or a video feed generally in the direction of a sighting axis of the laser instrument 12. The overview camera device 47 may include optical elements, such as, but not limited to, an objective and a focusing lens, a graphics processing unit (GPU) **68,** and a first imaging sensor **69,** which may comprise or be constituted by a CCD-based sensor, an active pixel-sensor, a CMOS-based sensor, and/or by any other type of suitable imaging sensors.

The tracking device 48 includes an optical radiation source **70,** such as, but not limited to, an infrared (IR) transmitter or a visible light transmitter, a driver circuit **71,** a second imaging sensor **72,** and a receiver interface circuit **73.** The driver circuit 71 provides current for the optical radiation source 70 which emits optical radiation, such as, but not limited to, infrared radiation or visible radiation. The second imaging sensor 72 receives at least a part of the optical radiation reflected at a target, and the current signal that is outputted by the second imaging sensor 72 is directed to the receiver interface circuit 73. After appropriate amplification and processing, the signal is sent via the first input/output interface circuit 52 to the first processing circuit 49 for further processing and/or analyzing. The optical radiation source 70 may be configured to emit modulated optical radiation in accordance with characteristics, such as, but not limited to, a frequency.

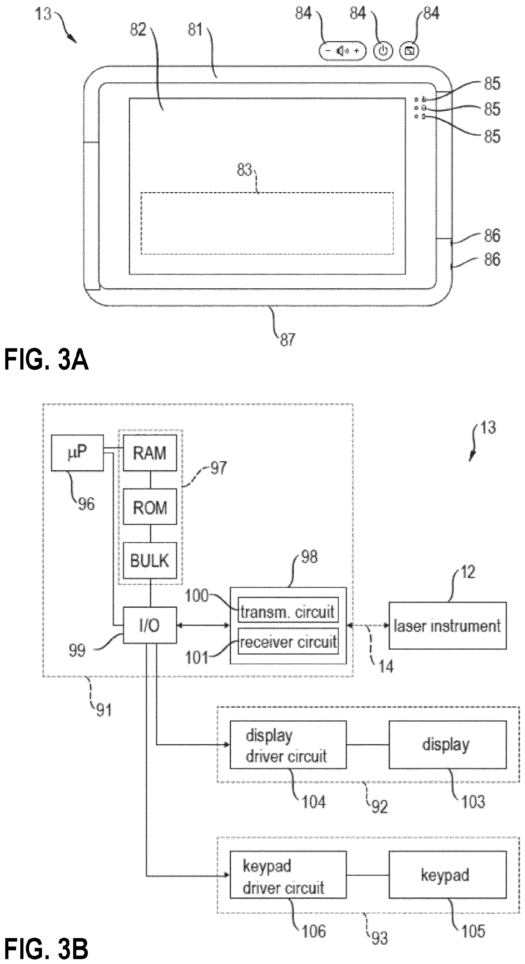

**FIGS. 3A****, B** show an exemplary version of the remote controller 13 used in the system 10 of FIG. 1 in a front view (FIG. 3A) and a block diagram of the main components of the remote controller 13 as illustrated in FIG. 3A (FIG. 3B).

The remote controller 13 is designed as tablet computer and includes a housing **81,** a touch screen display **82,** a battery **83,** a set of buttons **84,** e.g., volume control button, power on/off button, and display control button, a set of indicators **85,** e.g., for operating status, data storage status, and battery status, a set of connectors **86,** e.g., for docking, data storage, and USB, and a card slot **87.**

FIG. 3B shows a block diagram of the main components of the remote controller 13. The remote controller 13 may include a second electronic device **91,** a display device **92,** and an input device **93.**

The second electronic device 91 comprises a second processing circuit (µP) **96,** a second memory circuit **97** that may include associated random-access memory (RAM), read only memory (ROM), and some type of bulk memory (BULK), a second communications circuit **98,** and a second input/output (I/O) interface circuit **99.** The second processing circuit 96 may communicate with the second memory circuit 97 and second communications circuit 98 and is configured to control the remote controller 13. The second communications circuit 98 includes a second transmitter circuit **100** and a second receiver circuit **101** and is configured to be connected to the first communications circuit 51 of the laser instrument 12 via the communication link 14. The second input/output interface circuit 99 is an interface between the second processing circuit 96 and the various driver circuits of the remote controller 13.

In the second memory circuit 97 several program codes having computer-executable instructions for performing a method may be stored. The stored program codes may include a program code for performing a method for determining a rotational position of a reflective target.

The method for determining a rotational position of a reflective target is performed by a supervisory device of the system 10, the supervisory device having evaluation, data processing and control functionality. In the system 10, the supervisory device is integrated into the second processing circuit 96 of the second electronic device 91 of the remote controller 13. Alternatively, the supervisory device maybe integrated into the first processing circuit 49, or into the first and second processing circuits 49, 96, or in any other type of suitable processing circuit.

The display device 92 includes a display **103** and a display driver circuit **104.** The display driver circuit will be in communication with the second I/O interface circuit 99 and provides the correct interface and data signals for the display 103. If the remote controller 13 is a laptop computer, for example, then this would be the standard display seen in most laptop computers. Or, if the remote controller 13 is a tablet computer or a smart phone, in which case the display device is a much smaller physical device, the display device 103 could be a touch screen display.

The user-operated input device 93 includes a keypad **105** and a keypad driver circuit **106.** The keypad driver circuit will be in communication with the second I/O interface circuit 99 and controls the signals that interface to the keypad 105. If the display device 103 is a touch screen display, then there may not be a separate keypad on the remote controller 13, because most of the command or data to input functions will be available by touching the display itself and the keypad is integrated in the touch screen display. There may be some type of power on/off button, but that would not necessarily be considered a true keypad and typically would not be used for entering data.

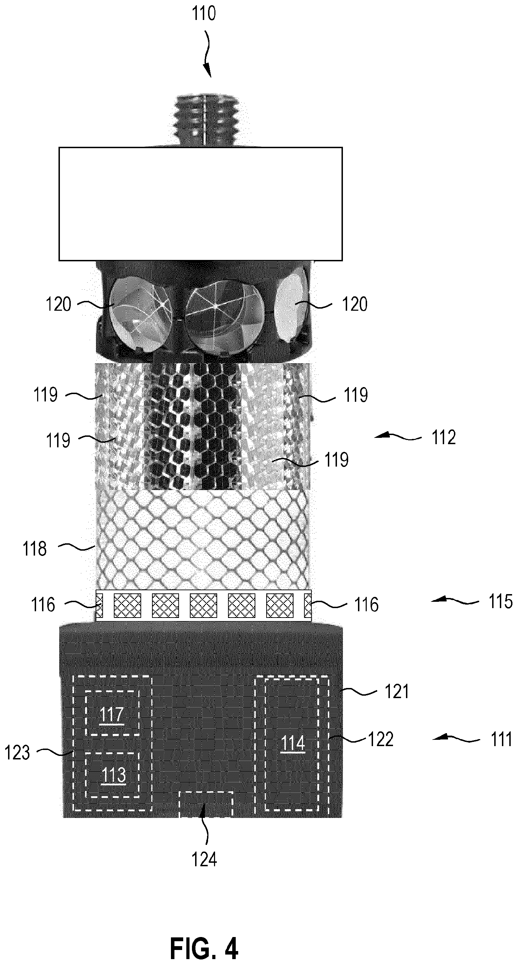

**FIG. 4** shows an exemplary version of a reflective target **110** according to the present invention. The target 110 comprises a base element **111,** a light reflecting area **112,** a communications circuit **113,** a power source **114** configured to power the target 110 and formed as battery, and a light receiving device **115** including an array of light receiving elements **116** and including a signal processing unit **117.**

The target 110 is configured to reflect at least a part of the first light beam 26 at the light reflecting area 112 and to receive at least a part of the second light beam 27 via the light receiving elements 116. Some optical properties of the light reflecting area 112, such as, but not limited to, a wavelength of maximum sensitivity and a spectral range of sensitivity, may at least partially be adapted to the first light beam 26 emitted by the laser transmitter 56 of the distance measuring device 42 to measure the distance of the target 110 to the laser instrument 12. Some optical properties of the light receiving elements 116, such as, but not limited to, a wavelength of maximum sensitivity and a spectral range of sensitivity, may at least partially be adapted to the second light beam 27 emitted by the optical radiation source 70 of the tracking device 48.

In the exemplary version of FIG. 4, the light reflecting area 112 includes a reflective foil **118,** an array of cat-eyes **119,** and an array of prisms **120.** The reflective foil 118, the cat-eyes 119, and the prisms 120 differ in their optical properties. The reflective foil 118 and the cat-eyes 119 are composed of multiple prisms arranged next to each other. The reflective foil 118 is cylindrically formed with a circular cross-section; alternatively, the cross-section of the reflective foil 118 may be formed as hexagon, octagon, or any other type of polygon.

A cat-eye is a target having a planar reflective section that includes a plurality of prisms, each prism is constituted by a corner cube having three surfaces oriented perpendicular to one another and each prism is oriented such that a common edge formed by two of the three surfaces is in the same plane as the target axis.

The base element 111 includes a housing **121,** a battery compartment **122,** a printed circuit board **123,** and a thread element **124** configured to connect the target 110 to a tripod, pole, or any other element. The battery 114 will be inserted into the battery compartment 122 to provide power to the target 110. The base element 111 includes the printed circuit board 123, on which the signal processing unit 117, the communications circuit 113, and all other electronical components of the target 110 are arranged.

The communications circuit 113 may include a transmitter circuit and a receiver circuit and is configured to be connected to the first communications circuit 51 of the laser instrument 12 and/or to the second communications circuit 98 of the remote controller 13. In the exemplary version show in FIG. 1, the target 15 is connected via the second communication link 16 to the remote controller 13. As shown in FIG. 1, the remote controller 13 is typically connected to the tripod or pole, on which the target is arranged.

The light reflecting area 112 is configured to reflect the light beam 26 of a first range of wavelengths at least partially, and it includes at least one of a reflective foil, an array of cat-eyes, and an array of reflective prisms. In the exemplary version of FIG. 4, the light reflecting area 112 includes a reflective foil, an array of cat-eyes, and an array of reflective prisms. Alternatively, the light reflecting area 112 may include only one of a reflective foil, an array of cat-eyes, and an array of reflective prisms, or a combination of two, such as, a reflective foil and an array of cat-eyes, or a reflective foil and an array of reflective prisms, or an array of cat-eyes and an array of reflective prisms.

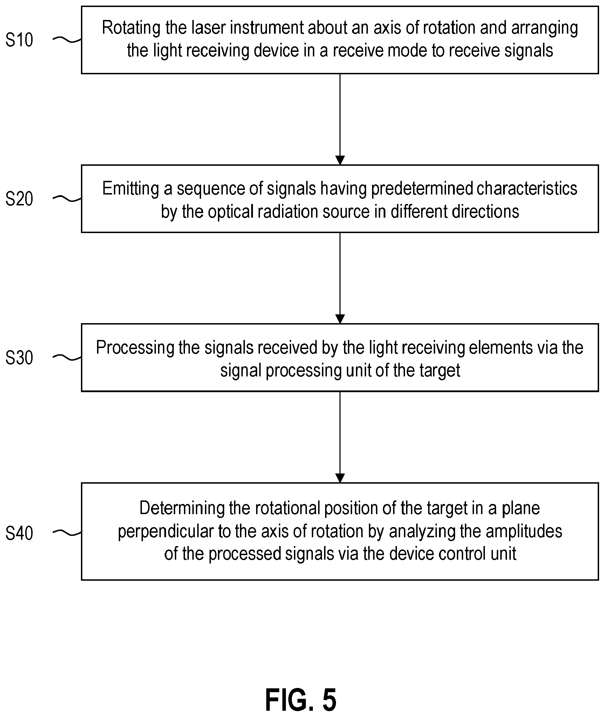

**FIG. 5** shows a method for determining a rotational position of a reflective target in a flow chart. The target could be the reflective target 110 of FIG. 4 or any other reflective target according to the present invention, and the method for determining the rotational position is performed by the laser instrument 12 shown in FIG. 1.

To determine the rotational position of the target, the laser instrument 12 is rotated about an axis of rotation that may be the rotating axis 35 or the pivoting axis 33 of the laser instrument 12, and the light receiving device 115 is arranged in a receive mode to receive signals that are emitted by the optical radiation source 70 of the laser instrument 12 (step **S10**). The printed circuit board 123 may include an electronic component that is operative to activate the light receiving device 115, whereas the trigger for activating may be transferred from the laser instrument 12 via the first communication link 14 to the supervisory device 96 and from the supervisory device 96 via the second communication link 16 to the target 110.

While rotating the laser instrument 12 about the axis of rotation, a sequence of signals having predetermined characteristics is emitted by the optical radiation source 70 in different directions (step **S20**). The signals that are received by the light receiving elements 116 are processed via the signal processing unit 117 (step **S30**). The amplitudes of the processed signals are analyzed to determine the rotational position of the target 110 in a plane perpendicular to the axis of rotation (step **S40**).

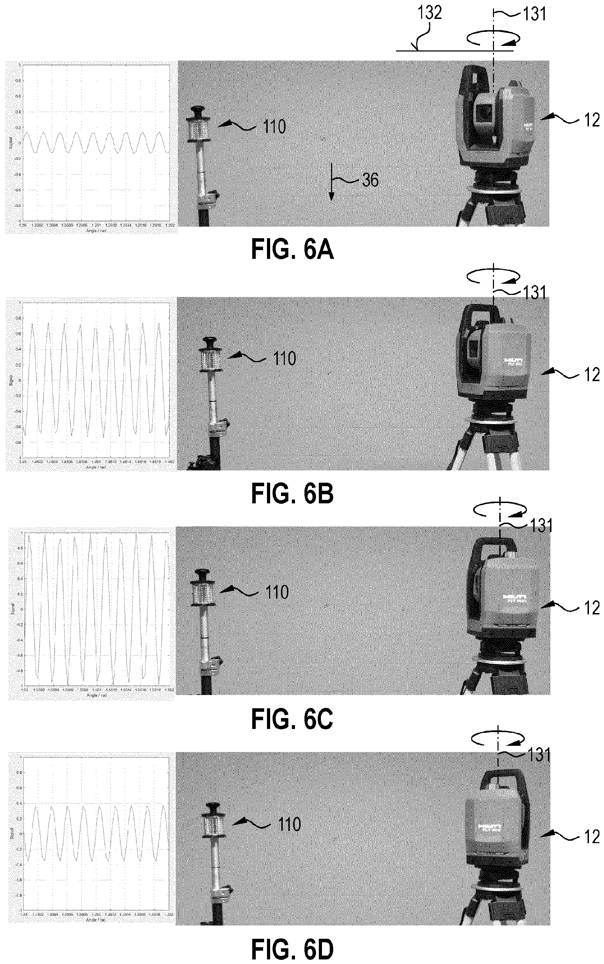

**FIGS. 6A-H** show how a first rotational position for a reflective target according to the present invention can be determined. The target could be the reflective target 15 of FIG. 1, the reflective target 110 of FIG. 4 or any other reflective target according to the present invention. The method for determining the rotational position is performed by the laser instrument 12 of FIG. 1 and the reflective target 110 of FIG. 4.

The laser instrument 12 is levelled such that the rotating axis 35 is parallel to the local direction of gravitation 36, and the levelled rotating axis 35 is called vertical axis **131.** The laser instrument 12 is rotated about the vertical axis 131 to find the rotational position of the target 110 that is the first rotational position in a horizontal plane **132** perpendicular to the vertical axis 131.

The light receiving elements 116 of the light receiving device 115 are configured in a receive mode to receive signals emitted by the optical radiation source 70. The optical radiation source 70 is configured to emit a sequence of signals having predetermined characteristics that allow to determine the first rotational position of the target 110 in the horizontal plane 132.

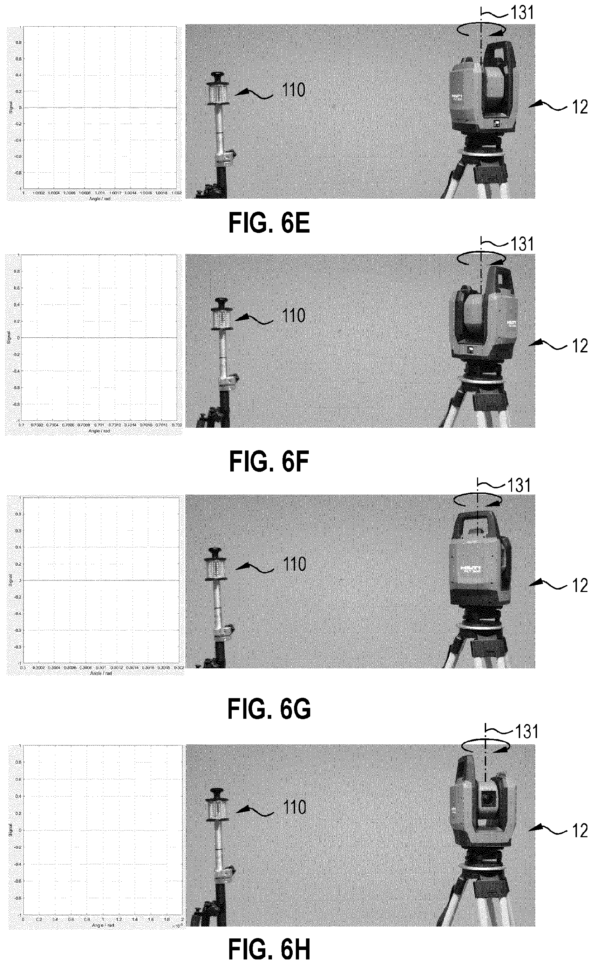

While rotating the laser instrument 12 from a first orientation (FIG. 6A) over a second orientation (FIG. 6B) to a third orientation (FIG. 6C), the amplitude of the processed signal increases. While rotating the laser instrument 12 from the third orientation (FIG. 6C) to a fourth orientation (FIG. 6D), the amplitude of the processed signal decreases. While rotating the laser instrument 12 from the fourth orientation (FIG. 6D) to a fifth orientation (FIG. 6E), the amplitude of the processed signal drops down to zero and stays at that zero level for a sixth orientation (FIG. 6F), a seventh orientation (FIG. 6G) and an eighth orientation (FIG. 6H).

The processed signals are transferred from the signal processing unit 117 of the target 110 to the laser instrument 12 and the rotational position of the target is determined by the device control unit 41 of the laser instrument 12. The target 110 may be connected via a communication link directly to the laser instrument 12, or the target may be connected via a first communication link to the remote controller that is connected via a communication link to the laser instrument 12.

In case that the first rotational position of the target 110 has been found, the laser instrument 12 is rotated about the vertical axis 131 and arranged in that first rotational position.

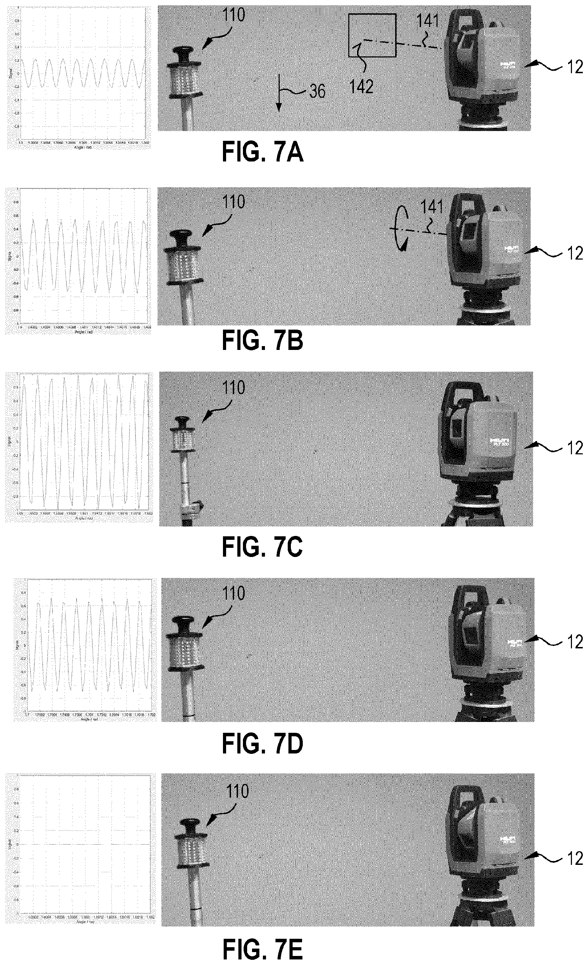

**FIGS. 7A-E** show how a second rotational position for the reflective target 110 of FIG. 4 can be determined. The method for determining the second rotational position is performed by the laser instrument 12 of FIG. 1 and the reflective target 110 of FIG. 4.

The laser instrument 12 is levelled such that the pivoting axis 33 is perpendicular to the local direction of gravitation 36, and the levelled pivoting axis 33 is called horizontal axis **141.** The measuring head 21 of the laser instrument 12 is rotated about the horizontal axis 141 to find the rotational position of the target 110 that is the second rotational position in a vertical plane **142** perpendicular to the horizontal axis 141 and oriented along the first rotational position.

The light receiving elements 116 of the light receiving device 115 are configured in a receive mode to receive signals emitted by the optical radiation source 70. The optical radiation source 70 is configured to emit a sequence of signals having predetermined characteristics that allow to determine the second rotational position of the target 110 in the vertical plane 142.

While rotating the laser instrument 12 from a first orientation (FIG. 7A) over a second orientation (FIG. 7B) to a third orientation (FIG. 7C), the amplitude of the processed signal increases. While rotating the laser instrument 12 from the third orientation (FIG. 7C) to a fourth orientation (FIG. 7D), the amplitude of the processed signal decreases. While rotating the laser instrument 12 from the fourth orientation (FIG. 7D) to a fifth orientation (FIG. 7E), the amplitude of the processed signal drops down to zero and stays at that zero level.

## Claims

1. A reflective target (15; 110) configured to be used in measuring and surveying applications, comprising:
▪ a base element (111),
▪ a light reflecting area (112) configured to reflect light beams (26) of a first range of wavelengths at least partially,
▪ a communications circuit (113) configured to be connected to a laser instrument (12) and/or a supervisory device (96) via a communication link (14; 16), and
▪ a power source (114) configured to provide power,
**characterized in that** the target (15; 110) further comprises a light receiving device (115) including an array of light receiving elements (116) and a signal processing unit (117), the light receiving elements (116) being configured to receive light beams (27) of a second range of wavelengths and the signal processing unit (117) being configured to process the received light beams.

2. The target according to claim 1, wherein the light reflecting area (112) includes at least one of a reflective foil (118), an array of cat-eyes (119), and an array of reflective prisms (120).

3. The target according to any of claims 1 to 2, wherein the light receiving elements (116) are arranged circumferentially about a central axis of the base element (111).

4. A system (10) for measuring and surveying applications, the system (10) comprising at least one reflective target (15; 110) according to any of claims 1 to 3, a laser instrument (12) including a distance measuring device (42) configured to measure via a first light beam (26) a distance to the target (15; 110), an angle measuring device (43, 45) configured to measure an orientation of the first light beam (26) relative to a reference orientation, an optical radiation source (70) configured to emit a second light beam (27), and a device control unit (49) configured to control the distance measuring device (42), angle measuring device (43, 45) and optical radiation source (70), and comprising a supervisory device (96), which has evaluation, data processing and control functionality.

5. The system according to claim 4, wherein the laser instrument (12) and the supervisory device (96) are connected via a first communication link (14) and the target (15; 110) and the supervisory device (96) are connected via a second communication link (16).

6. The system according to any of claims 4 to 5, wherein the first light beam (26) has a first angle of aperture in the range up to 2 degrees, and the second light beam (27) has a second angle of aperture in the range above 5 degrees.

7. A method for determining a rotational position of a reflective target (15; 110) according to any of claims 1 to 3 via a laser instrument (12) including a distance measuring device (42) configured to measure via a first light beam (26) a distance to the target (15; 110), an angle measuring device (43, 45) configured to measure an orientation of the first light beam (26) relative to a reference orientation, an optical radiation source (70) configured to emit a second light beam (27), and a device control unit (49) configured to control the distance measuring device (42), angle measuring device (43, 45) and optical radiation source (70), and via a supervisory device (96), which has evaluation, data processing and control functionality, the method comprising:
▪ the laser instrument (12) is rotated about an axis of rotation (131; 141) and the light receiving device (115) is arranged in a receive mode to receive signals emitted by the optical radiation source (70),
▪ while rotating the laser instrument (12) about the axis of rotation (131; 141), a sequence of signals having predetermined characteristics is emitted by the optical radiation source (70) and propagating in different directions,
▪ signals received by the light receiving elements (116) are processed via a signal processing unit (117) of the target (15; 110), and
▪ the rotational position of the target (15; 110) in a plane (132; 142) perpendicular to the axis of rotation (131; 141) is determined by analyzing the amplitudes of the processed signals.

8. The method according to claim 7, wherein the processed signals are transferred from the target (15; 110) to the laser instrument (12) and the rotational position of the target is determined via the device control unit (49) of the laser instrument (12).

9. The method according to claim 8, wherein the processed signals are transferred from the target (15; 110) via the supervisory device (96) to the laser instrument (12).

10. The method according to any of claims 7 to 9, wherein the rotational position of the target is determined by analyzing the processed signals and using the predetermined characteristics of the signals emitted by the optical radiation source (70).

11. The method according to any of claims 7 to 10, wherein the signals emitted by the optical radiation source (70) are modulated with a modulation parameter to generate the predetermined characteristics.

12. The method according to claim 11, wherein the modulation parameter is varied over an angle with respect to a reference angle in the plane (132; 142) perpendicular to the axis of rotation (131; 141).

13. The method according to any of claims 11 to 12, wherein the modulation parameter is a frequency.

14. The method according to any of claims 7 to 13, wherein the axis of rotation is a vertical axis (131) that is parallel to a local direction of gravitation (36) and the laser instrument (12) is rotated about said vertical axis (131) to find the rotational position of the target (15; 110) that is a first rotational position in a horizontal plane (132) perpendicular to the vertical axis (131).

15. The method according to claim 14, wherein, in case that the first rotational position of the target (15; 110) has been found, the laser instrument (12) is oriented in said first rotational position and a sequence of steps is performed to find a second rotational position of the target (15; 110) in a vertical plane (142), the sequence of steps comprising:
▪ the laser instrument (12) is rotated about a horizontal axis (141) that is perpendicular to the local direction of gravitation (36) and the light receiving device (116; 136) is arranged in a receive mode to receive signals emitted by the optical radiation source (70),
▪ while rotating the laser instrument (12) about the horizontal axis (141), a sequence of signals having predetermined characteristics is emitted by the optical radiation source (70) and propagating in different directions,
▪ the signals received by the light receiving elements (116) are processed via the signal processing unit (117), and
▪ the second rotational position of the target in the vertical plane (142) that is perpendicular to the horizontal axis (141) and oriented along the first rotational position is determined by analyzing the amplitudes of the processed signals.

16. A computer program product comprising a program code, which is stored on a computer-readable medium and which has computer-executable instructions for performing a method according to any of claims 7 to 15.
